# EUROPÄISCHE PATENTSCHRIFT

(11) **EP 2 838 828 B1**
(45) Veröffentlichungstag und Bekanntmachung des Hinweises auf die Patenterteilung: **18.05.2016**
(21) Anmeldenummer: 13712583.7
(22) Anmeldetag: 28.03.2013
(51) Int. Cl.: B66B 23/22, B32B 17/10

(54) **BELEUCHTBARES TRANSPARENTES PANEEL FÜR EINE FAHRTREPPE, EINEN FAHRSTEIG ODER EINE AUFZUGSKABINE**
ILLUMINABLE TRANSPARENT PANEL FOR AN ESCALATOR, A MOVING PATHWAY OR A LIFT CABIN
PANNEAU TRANSPARENT POUVANT ÊTRE ÉCLAIRÉ POUR UN ESCALIER ROULANT, UN TROTTOIR ROULANT OU UNE CABINE D'ASCENSEUR

(30) Priorität: 18.04.2012 EP 12164546
(43) Veröffentlichungstag der Anmeldung: 25.02.2015
(73) Patentinhaber: Inventio AG, 6052 Hergiswil NW (CH)
(72) Erfinder: NIEDERMAYER, Günther, A-1220 Wien (AT); MATHEISL, Michael, A-2331 Vösendorf (AT)
(86) Internationale Anmeldenummer: PCT/EP2013/056764
(87) Internationale Veröffentlichungsnummer: WO 2013/156294

(56) Entgegenhaltungen:
- DE-A1- 4 226 883
- JP-A- 2000 263 699

## Beschreibung

Die Erfindung betrifft eine Fahrtreppe, einen Fahrsteig oder eine Aufzugskabine mit mindestens einem beleuchtbaren transparenten Paneel.

Aufzüge werden sowohl im privaten wie auch im öffentlichen Bereich eingesetzt. Eine angenehme, ausreichend helle Beleuchtung und eine schmucke Innenausstattung beeinflussen das Wohlbefinden des Benutzers in der Aufzugskabine wesentlich. Oft werden Aufzugkabinen auch mit transparenten Wänden versehen, die den Benutzern die Sicht von der Aufzugskabine in die Umgebung ermöglichen.

Fahrtreppen und Fahrsteige werden nahezu ausschließlich im öffentlichen Bereich eingesetzt, zum Beispiel in Warenhäusern, Einkaufszentren sowie in größeren Hotels. Sie umfassen im Allgemeinen ein Tragwerk und mindestens ein im Tragwerk angeordnetes, sich in seiner Längsrichtung bewegbares Palettenband oder Stufenband, an das sich seitlich ortsfeste Balustraden anschließen. Die Balustraden weisen oft transparente Paneele auf, welche mittels eines Balustradensockels am Tragwerk befestigt sind. Balustraden mit transparenten Paneelen werden üblicherweise als Glasbalustraden bezeichnet. Oberhalb jeder Balustrade ist ein sich mit dem Palettenband oder Stufenband bewegender Handlauf angeordnet. Um den Einblick auf die interessante Technik einer Fahrtreppe oder eines Fahrsteiges zu ermöglichen, werden bisweilen auch die Fachwerke mit transparenten Paneelen verschalt.

Fahrtreppen und Fahrsteige weisen meistens Beleuchtungssysteme auf, die den Komfort der Benutzer erhöhen und mithelfen, Unfälle zu vermeiden. Bekannte Beleuchtungssysteme für Fahrsteig- und Fahrtreppenanlagen sind so ausgelegt, dass nur gewisse Bereiche der Fahrsteig- oder Fahrtreppenanlagen beleuchtet sind. Diese Bereiche befinden sich zwischen den Balustraden. Beleuchtet werden zum Beispiel nur ein oberer Bereich mit dem Handlauf, ein unterer Bereich, in welchem sich die Balustraden und das Palettenband beziehungsweise Stufenband treffen, oder diejenigen Bereiche, über welche die Fahrsteig- oder Fahrtreppenanlagen betreten oder verlassen werden.

In der DE 20 2009 014 813 U1 ist ein Beleuchtungssystem offenbart, das in eine Glasbalustrade integriert ist. Die Glasbalustrade weist einen dreischichtigen Aufbau auf. Zwischen zwei Schichten aus Glas ist eine folienförmige, organische Leuchtdiode (OLED) angeordnet. Großflächige organische Leuchtdioden sind relativ teuer und noch nicht in beliebiger Größe erhältlich. Die Lebensdauer dieser organischen Leuchtdioden ist aufgrund von Zersetzungsprozessen einzelner organischer Bauelemente noch sehr gering. Ferner können durch Alterungserscheinungen einzelne Bereiche ausfallen und unansehnliche "Beleuchtungslöcher" erzeugen. Der ganzflächige Einsatz organischer Leuchtdioden in Glasbalustraden ist daher schwierig zu realisieren und sehr teuer.

Seit einigen Jahren werden Fahrtreppen und Fahrsteige insbesondere in Warenhäusern, Einkaufszentren und größeren Hotels in die Gestaltungskonzepte der Gebäude mit einbezogen. Sie dienen nicht nur der reinen Beförderung von Benutzern, sondern auch als Gestaltungsmerkmale von Innen- und Außenräumen der Gebäude. So sind die Balustradenverkleidungen, Seitenverkleidungen und Untersichtverkleidungen in den unterschiedlichsten Farben und mit den unterschiedlichsten Materialien belegt erhältlich, um den individuellen Wünschen des Betreibers zu entsprechen.

Von den Betreibern wird gefordert, dass die mit lackierten oder belegten Paneelen verschalte Oberfläche einer Fahrtreppe oder eines Fahrsteiges ein einheitliches Erscheinungsbild aufweist. Somit müssen die einzelnen Paneele einen einheitlichen Farbton, eine einheitliche Farbsättigung und eine einheitliche Helligkeit aufweisen. Dies ist auch der langgehegte, aber immer noch unerfüllte Wunsch betreffend beleuchteter, großer Flächen. Wie weiter oben beschrieben, können bei der Glasbalustrade der DE 20 2009 014 813 U1 einzelne Bereiche der organischen Leuchtdiode durch Alterungserscheinungen ausfallen und unansehnliche "Beleuchtungslöcher" erzeugen. Ferner ist diese Art der Beleuchtung sehr aufwändig und teuer im Unterhalt.

Ähnliche Vorgaben gelten auch für die Innenausstattung von Aufzugskabinen. Um dem Benutzer ein Gefühl von Sicherheit zu geben, sollte ein möglichst klares, homogenes Erscheinungsbild vorhanden sein. Zerkratzte oder beschädigte Kabinenwände, eine mangelhafte Ausleuchtung oder hellere und dunklere Stellen der beleuchteten Oberflächen des Kabineninnenraums können die Angst des Benutzers fördern.

Aufgabe der vorliegenden Erfindung ist es daher, ein beleuchtbares transparentes Paneel für einen Fahrsteig, eine Fahrtreppe oder eine Aufzugkabine zu schaffen, das eine gleichmäßig beleuchtete Oberfläche und einen kompakten Aufbau aufweist sowie kostengünstig in der Herstellung und Wartung ist.

Diese Aufgabe wird gelöst durch ein beleuchtbares transparentes Paneel, welches durch mindestens eine Lichtquelle beleuchtbar ist. Die Lichtquelle ist an mindestens einem Kantenbereich des beleuchtbaren transparenten Paneels angeordnet. Das beleuchtbare transparente Paneel weist einen mehrere Schichten beinhaltenden Aufbau auf. Die beiden, einander gegenüberliegenden Seitenoberflächen jeder Schicht beziehungsweise die Schicht selbst sind in ihrer flächigen Ausdehnung durch einen Kantenbereich begrenzt. Die Schichten des Aufbaus sind mit ihren Seitenoberflächen anliegend angeordnet, das heißt, dass die Schichten mit ihren Seitenoberflächen aufeinandergeschichtet werden, um den gewünschten Aufbau zu erhalten. Die Schichtfolge des Aufbaus ist festgelegt, wobei eine erste Schicht eine erste Glasscheibe ist, eine zweite Schicht eine erste transparente Polymerschicht ist, eine dritte Schicht eine zweite Glasscheibe ist, eine vierte Schicht eine transparente, kantenbeleuchtbare, lichtstreuende Partikel beinhaltende Polymerwerkstoffplatte ist, eine fünfte Schicht eine dritte Glasscheibe ist, eine sechste Schicht eine zweite transparente Polymerschicht ist und eine siebente Schicht eine vierte Glasscheibe ist.

Selbstverständlich können die beleuchtbaren transparenten Paneele auch weitere transparente Schichten zwischen den vorangehend beschriebenen Schichten aufweisen. Die erweiterte Schichtabfolge dieser beleuchtbaren transparenten Paneele entspricht trotz der hinzugefügten Schichten dem vorangehend beschriebenen Aufbau. Jede zusätzliche Schicht vermindert aber die Lichtleistung und die Transparenz (Durchlässigkeit für elektromagnetische Wellen des sichtbaren Lichts) des beleuchtbaren transparenten Paneels.

Damit das transparente Paneel das im Kantenbereich eingespeiste Licht gleichmäßig über die in ihrer flächigen Ausdehnung durch den Kantenbereich begrenzte Seitenoberfläche abgeben kann, ist ein spezieller Lichtleiter erforderlich. Seit einiger Zeit sind im Handel transparente, kantenbeleuchtbare Polymerwerkstoffplatten aus Polymethylmethacrylat (PMMA) erhältlich, die zusätzlich transparente, lichtstreuende Partikel aufweisen. Durch die eingebetteten, lichtstreuenden Partikel weisen diese Polymerwerkstoffplatten das gewünschte Lichtleitverhalten auf. Sie werden kantenbeleuchtet und verteilen ihr in den Kantenbereich eingespeistes Licht gleichmäßig über die in ihrer flächigen Ausdehnung durch den Kantenbereich begrenzte Seitenoberflächen der Polymerwerkstoffplatte. Die Eintrittsfläche des Lichts ist vorzugsweise orthogonal zur Austrittsfläche des Lichts angeordnet, um Lichtkonzentrationen an der Seitenoberfläche zu vermeiden. Durch diese Eigenschaften kann ein beleuchtbares Paneel sehr kostengünstig und einfach aufgebaut werden. Ferner kann die Lichtquelle seitlich der Polymerwerkstoffplatte angeordnet werden, was deren Wartung erheblich erleichtert und zu einem sehr kompakten Aufbau des beleuchtbaren Paneels führt.

Diese Polymerwerkstoffplatten strahlen gleichmässig über beide Seitenoberflächen ab. Die abstrahlenden Seitenoberflächen können auch durch einen Informationsträger, beispielsweise eine Motivfolie, überspannt sein und eine Schutzabdeckung, beispielsweise aus kratzfestem Glas aufweisen.

Die Verwendung des vorangehend beschriebenen Lichtleiters für kantenbeleuchtbare transparente Paneele birgt aber die nachfolgend aufgeführten Nachteile, welche nicht zu den gewünschten Eigenschaften des beleuchtbaren Paneels führen. Die Abdeckungen beziehungsweise der Informationsträger dürfen gemäß den Herstellerangaben nicht vollflächig auf die Polymerwerkstoffplatte geklebt oder laminiert werden, da bei einem optischen Kontakt lokale, störende Aufhellungen und Verdunkelungen entstehen würden. Bei der Konstruktion von kantenbeleuchtbaren Paneelen mit den vorangehend beschriebenen Polymerwerkstoffplatten ist daher auf eine entsprechende Distanzierung zwischen den einzelnen Schichten zu achten, so dass sie niemals anliegend angeordnet sind. Die geforderte Beabstandung der einzelnen Schichten führt zu dicken Paneelen, die als Seitenverkleidung eingesetzt, die Breite der Fahrtreppe, des Fahrsteiges oder der Aufzugkabine erheblich erhöhen und als Glasbalustrade eingesetzt, einen klotzigen, unästhetischen Eindruck hinterlassen. Des Weiteren werden durch die Beabstandung der Schichten im Paneel Kammern gebildet, in denen sich Kondenswasser bilden kann.

Vibrationen, verursacht durch die Benutzer einer Fahrtreppe, eines Fahrsteiges oder Aufzugs könnten ferner zu temporären optischen Kontakten führen. Durch die temporären optischen Kontakte werden wandernde Aufhellungen und Verdunkelungen erzeugt, die zur Verunsicherung der Benutzer führen und diese von der Benutzung der Fahrtreppe, des Fahrsteiges oder des Aufzugs abschrecken könnten.

Obwohl die Seitenoberflächen der Polymerwerkstoffplatten vom Hersteller mit Schutzfolien versehen sind, können diese nach dem Transport, der Lagerung oder dem Zuschneiden trotzdem Kratzer aufweisen. Diese sind ohne Kantenbeleuchtung von bloßem Auge oftmals kaum erkennbar, bündeln jedoch das aus der Oberfläche austretende Licht sehr stark und stören den optischen Eindruck des beleuchteten Paneels.

Die vorgenannten Nachteile führten dazu, dass die kantenbeleuchtbaren Polymerwerkstoffplatten mit lichtstreuenden Partikel bisher nicht geeignet schienen, um kantenbeleuchtbare Paneele für Fahrtreppen und Fahrsteige zu schaffen. Bei Aufzügen sind sie höchstens für Deckenbeleuchtungen einsetzbar, aber wegen der möglichen temporären optischen Kontakte nur ohne Schutzabdeckung.

Erst durch die festgelegte Schichtfolge des mehrere, anliegend angeordnete Schichten umfassenden Aufbaus konnte eine gleichmäßige Lichtverteilung über die durch den Kantenbereich begrenzte flächige Ausdehnung des Paneels erreicht und eine homogen beleuchtete Seitenoberfläche geschaffen werden. Eine zentrale Bedeutung kommt dabei der ersten, zweiten, dritten, sowie der fünften, sechsten und siebenten Schicht zu. Nachfolgend wird deren Funktionsweise anhand der ersten, zweiten und dritten Schicht erklärt, diese Erklärungen treffen aber auch auf die fünfte, sechste und siebenten Schicht zu.

Die erste Schicht und die dritte Schicht sind Glasscheiben, welche einen für Glas typischen Brechungsindex von 1.45 bis 2.14 (dimensionslose Größe) aufweisen. Die zweite Schicht, welche eine transparente Polymerschicht ist, weist einen Brechungsindex im Bereich von 1.48 bis 1.56 auf. Bei der Verwendung der verschiedenen Materialien ist es unwahrscheinlich, dass die Polymerschicht genau denselben Brechungsindex wie die beiden Glasscheiben aufweist, die beiden Brechungsindizes unterscheiden sich aber nur geringfügig voneinander. Dies führt dazu, dass das durch Kratzer in der Oberfläche der Polymerplatte der vierten Schicht sowie durch optische Kontakte zwischen den Schichten gebündelte Licht zerstreut wird, ohne es wahrnehmbar in die Spektralfarben zu zerlegen.

Schon aus geringer Distanz betrachtet, weist das beleuchtete Paneel durch diesen Aufbau eine gleichmäßig leuchtende Seitenoberfläche auf.

Wenn in der vorliegenden Schrift eine gleichmäßige beziehungsweise homogene Lichtverteilung über die Seitenoberfläche erwähnt ist, bedeutet dies nicht, dass jeder Bereich der Seitenoberfläche des beleuchtbaren transparenten Paneels genau die gleiche Strahlungsleistung aufweisen muss. So kann der Randbereich der Seitenoberfläche aufgrund der näheren Lage zum Lichtquelle durchaus eine leicht höhere Leuchtdichte aufweisen als die Mitte der Seitenoberfläche des beleuchtbaren Paneels. Eine gleichmäßig beziehungsweise homogen leuchtende Seitenoberfläche umschreibt klar und deutlich die Absenz von Lichtkonzentrationen aufgrund von sichtbaren Kratzern, optischen Kontakten und deutlich wahrnehmbarer Hell- und Dunkelstellen die über die Seitenoberfläche verteilt sind, wie sie beispielsweise in der EP 1 489 036 A1 infolge einer Überlagerung der Lichtkegel mehrerer Lichtquellen erfolgen kann.

Es hat sich gezeigt, dass die erste Glasscheibe, die erste transparente Polymerschicht und die zweite Glasscheibe durch eine Verbundglasscheibe ersetzt werden kann um denselben Effekt zu erzielen. Somit kann die transparente Polymerschicht eine Kunststofffolie oder ein Polymerklebstoff sein.

Wenn das beleuchtbare transparente Paneel als Glasbalustrade einer Fahrtreppe oder eines Fahrsteiges oder als Kabinenwand einer Aufzugskabine verwendet wird, muss es hohen mechanischen Belastungen standhalten. Um dies zu erreichen, kann mindestens die zweite Glasscheibe oder die dritte Glasscheibe eine gehärtete Sicherheitsglasscheibe (Einscheiben-Sicherheitsglas oder Panzerglas) sein.

Die Schichten des Aufbaus müssen mit geeigneten Mitteln zu einem kantenbeleuchtbaren transparenten Paneel zusammengehalten werden. Diese Mittel können Rahmenprofile sein, die die Kantenbereiche aller Schichten umfassen. Je nach Ausgestaltung des Paneel-Aufbaus können die Kantenbereiche durch U-Profile, Winkelprofile oder Z-Profile eingefasst werden oder die Schichten mittels Befestigungselementen wie Federn, Schrauben, Klammern und dergleichen mehr an einem Rahmen fixiert werden. Das beleuchtbare transparente Paneel muss nicht zwingend umlaufend mit einem Rahmenprofil eingefasst sein. Das beleuchtbare transparente Paneel kann auch nur in mindestens einem Abschnitt der Kantenbereiche der anliegend angeordneten Schichten ein Rahmenprofil aufweisen, durch das die Kantenbereiche der Schichten in diesem Abschnitt eingefasst sind.

Sofern die Lichtquelle im Bereich eines Rahmenprofils angeordnet werden soll, kann dieses mindestens einen Durchbruch aufweisen, welcher auf die Lage und Größe dieser mindestens einen Lichtquelle abgestimmt ist. Als Lichtquelle können eine Vielzahl von Beleuchtungskörpern wie Leuchtstoffröhren, Leuchtdioden, Kaltkathodenlampen und dergleichen mehr eingesetzt werden. Auch eine den Kantenbereich der Polymerwerkstoffplatte umlaufende OLED (organic light emitting diode) ist möglich. Wenn beispielsweise eine Reihe von Leuchtdioden als Lichtquelle verwendet wird, kann das Rahmenprofil eine Reihe von Durchbrüchen aufweisen, wobei die Teilung der Leuchtdioden der Teilung der Durchbrüche entspricht.

Eine Fahrtreppe oder ein Fahrsteig weist in den meisten Fällen große Seitenflächen und eine große Balustradenfläche auf, eine Aufzugkabine weist große Kabinenwandflächen und eine große Deckenfläche auf. Alle diese Flächen können durch mindestens ein beleuchtbares transparentes Paneel verkleidet werden. Um die Montage zu vereinfachen, kann das mindestens eine beleuchtbare transparente Paneel in mehrere Paneel-Abschnitte unterteilt werden. Jeder Paneel-Abschnitt weist dann den aus mehreren, anliegend angeordneten Schichten beinhaltenden Aufbau auf.

Durch den mehrere Schichten aufweisenden Aufbau des Paneels beziehungsweise des Paneel-Abschnitts können Fugen zwischen den einzelnen Schichten vorhanden sein, auch wenn die Schichten satt aneinander anliegen oder sogar durch einen Spannrahmen gegeneinander gepresst sind. Die Fugenbreite der Fugen hängt von der Unebenheit der Seitenoberflächen und Steifigkeit der einzelnen Schichten ab, die aufeinander geschichtet den Aufbau des Paneels ergeben. Diese Fugen sind sehr schmal und weisen eine hohe Kapillarität auf. Um zu verhindern, dass sich beispielsweise Reinigungswasser in den Fugen der Paneele ansammelt, können die Fugen in den Kantenbereichen der Schichten mittels eines Dichtungselements umlaufend abgedichtet sein. Das Dichtungselement weist zwischen den Schichten eine Fugentiefe von 0,2 mm bis 20 mm auf. Vorzugsweise beträgt die Fugentiefe jedoch 8 mm bis 12 mm. Dadurch ist die Dichtigkeit sicher gegeben und das Dichtungselement kann problemlos durch das Rahmenprofil oder durch Zierleisten verborgen werden, ohne zu viel beleuchtbare Seitenoberfläche des transparenten Paneels zu verdecken. Das Dichtungselement kann beispielsweise eine Klebefolie mit einem dichtenden Klebefilm sein, aber auch eine Schicht einer aushärtenden Paste wie Silikonkautschuk und dergleichen mehr. Vorzugsweise wird transparenter Silikonkautschuk verwendet.

Damit der Eintritt des von der Lichtquelle emittierten Lichts in die Polymerwerkstoffplatte der vierten Schicht nicht behindert wird, kann das Dichtelement eine auf die Lichtquelle und die vierte Schicht abgestimmte Ausnehmung aufweisen.

Um einen identischen optischen Eindruck zweier nebeneinander angeordneter Paneele oder Paneel-Abschnitte zu erwirken, kann sich der einzubringende Lichtstrom des Lichtelements jedes Paneels oder Paneel-Abschnitts unterscheiden, da die einzelnen Paneele oder Paneel-Abschnitte unterschiedlich große Seitenoberflächen und Konturen aufweisen können. Vorzugsweise ist daher jedem Paneel oder Paneel-Abschnitt eine eigene, in der Lichtstärke und/oder im Farbton und/oder in der Farbsättigung einstellbare Lichtquelle zugeordnet.

Ferner kann jedem Paneel oder Paneel-Abschnitt mindestens ein Sensor zugeordnet sein. Dies kann nur ein einziger Sensor sein, der als Sensorsignal ein digitalisiertes Bild erfasst, dessen Bildbereiche mittels eines Bildverarbeitungsprogramms den einzelnen Paneel-Abschnitten zugeordnet werden können. Als Sensor eignet sich beispielsweise ein CCD-Sensor. Durch das Bildverarbeitungsprogramm können die Lichtstärke, der Farbton und die Farbsättigung der einzelnen Bildbereiche miteinander verglichen werden. Aus diesem Vergleich sind Regelungsdaten und/oder Regelungssignale errechenbar, die einer Kontrolleinheit zuführbar sind. Die Kontrolleinheit regelt die Lichtquelle der Paneele oder Paneel-Abschnitte unter Berücksichtigung der Regelungsdaten und/oder Regelungssignale.

Es können aber auch gleich viele Sensoren wie Paneele oder Paneel-Abschnitte vorhanden sein, die vorzugsweise an geeigneter Stelle im transparenten Paneel angeordnet sind. Selbstverständlich sind auch mehrere Sensoren pro Paneel oder Paneel-Abschnitt einsetzbar. Auch diese Sensoren können die Lichtstärke und/oder den Farbton und/oder die Farbsättigung des zugeordneten, beleuchteten Paneels oder Paneel-Abschnitts erfassen. Das Signal des mindestens einen Sensors ist einer Kontrolleinheit zuführbar und kann von dieser verarbeitet werden.

Die Kontrolleinheit kann eine von der Fahrtreppe oder des Fahrsteiges unabhängige Recheneinheit sein, sie kann aber auch ein Teil einer Steuerung der Fahrtreppe oder des Fahrsteiges sein. Beispielsweise kann die Kontrolleinheit aufgrund des Sensorsignals erkennen, ob alle Paneel-Abschnitte beleuchtet sind oder nicht. Ferner kann das Sensorsignal zur Regelung der Lichtstärke und/oder des Farbtons und/oder der Farbsättigung des zugeordneten Paneels oder Paneel-Abschnitts herangezogen werden. Dies ermöglicht, die Paneele oder Paneel-Abschnitte wahlweise zu schalten, den Farbton, die Farbsättigung und die Lichtstärke zu variieren und durch diese Lichtakzente die Wahrnehmung und Stimmung der Benutzer zu beeinflussen. So können beispielsweise durch eine warme, sanfte Beleuchtung Aggressionen und Ängste gedämpft und das Risiko von Vandalenakten gesenkt werden. Der Wechsel zu unangenehmerer, kalt oder grell wirkender Beleuchtung kann dazu führen, dass unerwünschte Personen die Umgebung beispielsweise der Fahrtreppe oder des Fahrsteiges rasch verlassen.

Wenn mindestens zwei Paneel-Abschnitte vorhanden sind, kann einer der Paneel-Abschnitte als Master definiert sein und die Lichtstärke und/oder den Farbton und/oder die Farbsättigung vorgeben. Die übrigen Paneel-Abschnitte können als Slave definiert sein, wobei durch die Kontrolleinheit deren Lichtstärke und/oder deren Farbton und/oder deren Farbsättigung dem als Master definierten Paneel-Abschnitt angepasst werden können. Diese Anpassung kann unmittelbar erfolgen, so dass der Benutzer beziehungsweise der Betrachter der Fahrtreppe oder des Fahrsteiges kaum wahrnimmt, dass ein Unterschied zwischen zwei Paneelen oder Paneel-Abschnitten besteht. Die Anpassung kann aber auch bewusst mit größerer Zeitverzögerung erfolgen, um zusätzliche, dynamische Lichtwechseleffekte zu erzeugen. Es kann auch eine kaskadenartige Verknüpfung der einzelnen Paneel-Abschnitte vorhanden sein, so dass bei mehreren Paneel-Abschnitten der vorangehende Paneel-Abschnitt immer als Master für den nachfolgenden Paneel-Abschnitt dient.

Selbstverständlich kann die erste Schicht und oder die siebente Schicht mindestens teilweise von einer Motivfolie überspannt oder mit einer Bedruckung versehen sein, so dass bei eingeschaltetem Lichtquelle die Motivfolie oder die Bedruckung durch das beleuchtbare transparente Paneel hinterleuchtet ist. Die Aufdrucke und Motivfolien können ferner mittels einer weiteren Glasscheibe geschützt werden, welche diese und die erste beziehungsweise siebente Schicht überspannt.

Das beleuchtbare transparente Paneel kann vielseitig in einer Fahrtreppe oder in einem Fahrsteig eingesetzt werden. Eine Fahrtreppe oder ein Fahrsteig beinhaltet ein Tragwerk, mindestens ein im Tragwerk angeordnetes Stufenband oder Palettenband und je eine am Tragwerk angeordnete, an jeder Längsseite des Stufenbandes oder Palettenbandes sich erstreckende Balustrade. Das Tragwerk weist große Seitenflächen auf. Ferner sind auch große Balustradenseitenflächen vorhanden. Alle diese Flächen können nach Wunsch des Betreibers mit einem beleuchtbaren transparenten Paneel versehen oder verkleidet sein. Zu jedem beleuchtbaren transparenten Paneel sollte die Fahrtreppe oder der Fahrsteig mindestens eine Lichtquelle aufweisen, welche im Kantenbereich des beleuchtbaren transparenten Paneels angeordnet ist.

Das beleuchtbare transparente Paneel einer oder beider Balustraden mit seinen beleuchtbaren Seitenoberflächen kann den Bereich des Stufenbandes oder Palettenbandes hervorragend ausleuchten. Aufgrund der großflächigen Verteilung des Lichts über die Seitenoberfläche des beleuchtbaren transparenten Paneels werden die Benutzer nicht geblendet.

Wie weiter oben erwähnt, kann auch die Aufzugkabine eines Aufzugs mit beleuchtbaren transparenten Paneelen ausgerüstet sein. Die Aufzugkabine weist üblicherweise einen Kabinenrahmen auf. Am Kabinenrahmen werden Kabinenwände, gegebenenfalls eine Kabinentüre, ein Kabinenboden und ein Kabinendach befestigt. Jeder dieser Teile kann als beleuchtbares transparentes Paneel ausgebildet sein. Vorzugsweise erstrecken sich die beleuchtbaren Paneele über die gesamte Fläche der Kabinenwände, gegebenenfalls die Kabinentüre, den Kabinenboden und/oder das Kabinendach. Eine mit beleuchtbaren transparenten Paneelen versehene Aufzugskabine sollte mindestens eine Lichtquelle aufweisen, die an mindestens einem Kantenbereich des mindestens einen, beleuchtbaren transparenten Paneels angeordnet ist.

Der Aufbau eines beleuchtbaren transparenten Paneels sowie dessen Anwendungsmöglichkeiten in einer Fahrtreppe, in einem Fahrsteig oder in einer Aufzugskabine werden im Folgenden anhand einer Fahrtreppe und einer Aufzugkabine mit Bezugnahme auf die Zeichnungen näher erläutert. Darin zeigen:
- Figur 1:: schematisch im Aufriss eine Fahrtreppe mit einem Tragwerk und mit Balustraden, welche beleuchtbare transparente Paneele aufweisen;
- Figur 2:: die Fahrtreppe der Figur 1 im Querschnitt A-A
- Figur 3:: eine Detailansicht des in der Figur 2 angegebenen Details B, in welchem der Aufbau des beleuchtbaren, transparenten Paneels der Balustrade und dessen Befestigung am Tragwerk im Schnitt dargestellt ist;
- Figur 4:: in dreidimensionaler, vergrößerter Ansicht ein Ausschnitt des in der Figur 3 gezeigten beleuchtbaren, transparenten Paneels der Balustrade aus der in Figur 3 angegebenen Blickrichtung C, und
- Figur 5:: schematisch in geschnittenem Aufriss einen Aufzug mit einer Aufzugkabine, deren Kabinenwände und deren Kabinendach beleuchtbare transparente Paneele sind.

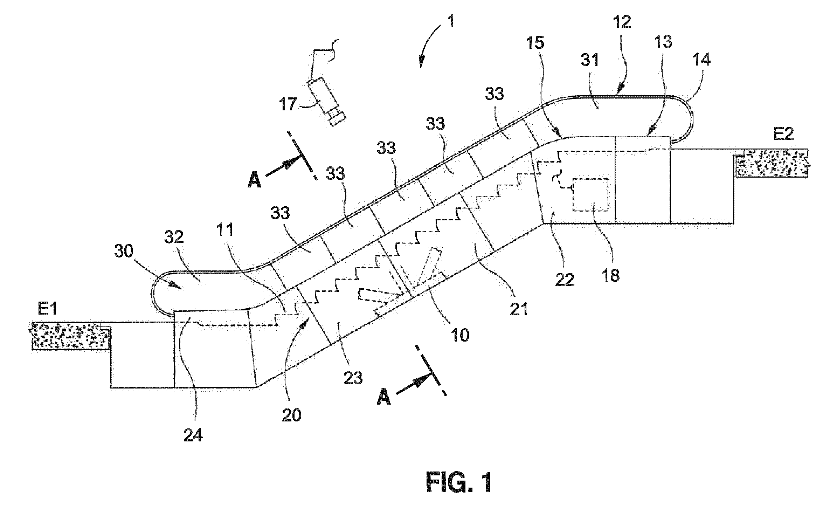

In Figur 1 ist schematisch im Aufriss eine Fahrtreppe 1 mit einem Tragwerk 10 dargestellt. Die Fahrtreppe 1 verbindet eine untere Ebene E1 mit einer oberen Ebene E2. Im Tragwerk 10 ist ein umlaufendes Stufenband 11 angeordnet, welches in der oberen Ebene E2 und in der unteren Ebene E1 umgelenkt wird und somit einen vorlaufenden Abschnitt und einen rücklaufenden Abschnitt aufweist. Der besseren Übersichtlichkeit wegen wurde auf die Darstellung des rücklaufenden Abschnitts verzichtet, ebenso auch auf die Darstellung von Spanten, Führungsschienen, Schienenblöcken und einer Antriebseinheit. Die Fahrtreppe 1 weist ferner zwei Balustraden 12 auf, die sich jeder Längsseite des Stufenbandes 11 entlang erstrecken, wobei in der Figur 1 nur die in der Betrachtungsebene vorne befindliche Balustrade 12 sichtbar ist. An jeder Balustrade 12 ist ein Handlauf 14 umlaufend angeordnet, wobei dessen rücklaufender Abschnitt in einem Balustradensockel 13 angeordnet ist, welcher die Balustrade 12 mit dem Tagwerk 10 verbindet. Sofern das Tragwerk 10 und die darin angeordneten Komponenten einsehbar sein sollen, können die Seitenwände des Tragwerks 10 mit mindestens einem beleuchtbaren transparenten Panel 20 verkleidet sein, wobei dieses in mehrere Paneel-Abschnitte 21, 22, 23, 24 unterteilt ist. Die Paneel-Abschnitte 21, 22, 23, 24 erstrecken sich in der Höhe über das Tragwerk 10 und den Balustradensockel 13.

In der Figur 1 zeigt sich auch einer der großen Vorteile des Aufbaus der beleuchtbaren transparenten Paneele. Die beleuchtbaren transparenten Paneele können in ihrer flächigen Ausdehnung, gemeint ist damit die Kontur von deren Seitenoberfläche, nahezu alle denkbaren Formen aufweisen. Im Ausführungsbeispiel der Figur 1 weist ein erster Paneel-Abschnitt 21 des beleuchtbaren transparenten Paneels 20 eine rechteckige Seitenoberfläche auf und die Seitenoberfläche eines zweiten Paneel-Abschnitts 22 ist den zu verkleidenden Konturen mit einem Übergangsradius 15 und dem auslaufenden Balustradensockel 13 angepasst. Selbstverständlich kann das Tragwerk 10 und der Balustradensockel 13 anstelle der beleuchtbaren transparenten Paneele 20 auch mit herkömmlichen opaken Paneelen verschalt beziehungsweise verkleidet sein.

Die Balustrade 12 kann mindestens ein beleuchtbares transparentes Paneel 30 aufweisen. Dieses beleuchtbare transparente Paneel 30 ist auch in mehrere Paneel-Abschnitte 31, 32, 33 unterteilt. Um die Herstellungskosten möglichst tief zu halten, weist das beleuchtbare transparente Paneel 30 mehrere mittlere Paneel-Abschnitte 33 auf, deren rechteckige Seitenoberfläche in der Länge und in der Höhe identische Abmessungen aufweisen. Ein oberer Paneel-Abschnitt 31 und ein unterer Paneel-Abschnitt 32 sind in ihrer flächigen Ausdehnung der Kontur der Balustrade 12 in diesen Bereichen und dem jeweils angrenzenden mittleren Paneel-Abschnitt 33 angepasst.

Wie vorangehend beschrieben, kann eine Fahrtreppe 1 oder ein Fahrsteig 1 mehrere beleuchtbare Paneele 20, 30 oder Paneel-Abschnitte 21, 22, 23, 24, 31, 32, 33 aufweisen. Um eine homogene Beleuchtung über alle Paneele 20, 30 beziehungsweise Paneel-Abschnitte 21, 22, 23, 24, 31, 32, 33 zu erreichen, kann ein vorbestimmter Bereich der Fahrtreppe 1 oder des Fahrsteiges 1 mittels mindestens einen bildgebenden Sensors 17 überwacht werden. Im vorliegenden Beispiel dient eine schematisch dargestellte Videokamera als Sensor 17, dessen Signale beziehungsweise Daten an die Steuerung 18 der Fahrtreppe 1 gesendet werden können. In der Steuerung 18 können die Bildsequenzen des Sensors 17 mittels eines Bildverarbeitungsprogramms kontinuierlich oder in diskreten Schritten analysiert werden. Wenn die Lichtstärke und/oder der Farbton und/oder die Farbsättigung eines Paneels beziehungsweise Paneel-Abschnitts von den anderen abweicht, kann die nicht dargestellte Lichtquelle dieses Paneels 20, 30 oder Paneel-Abschnitts 21, 22, 23, 24, 31, 32, 33 nachgeregelt werden.

Um die Übersichtlichkeit zu erhöhen, wurden die Signalleitungen zwischen dem Sensor 17 und der Steuerung 18 unterbrochen dargestellt. Selbstverständlich können anstelle der Signalleitungen auch drahtlose Übermittlungsvorrichtungen eingesetzt werden. Die Steuerung und Regelung der Lichtstärke und/oder des Farbtons und/oder der Farbsättigung ermöglicht, die Paneele 20, 30 oder wenn vorhanden, die Paneel-Abschnitte 21, 22, 23, 24, 31, 32, 33 nach den Vorgaben des Betreibers einer Fahrtreppe 1oder eines Fahrsteiges 1 wahlweise zu schalten, den Farbton, die Farbsättigung und die Lichtstärke zu variieren und durch diese Lichtakzente die Wahrnehmung und Stimmung der Benutzer zu beeinflussen.

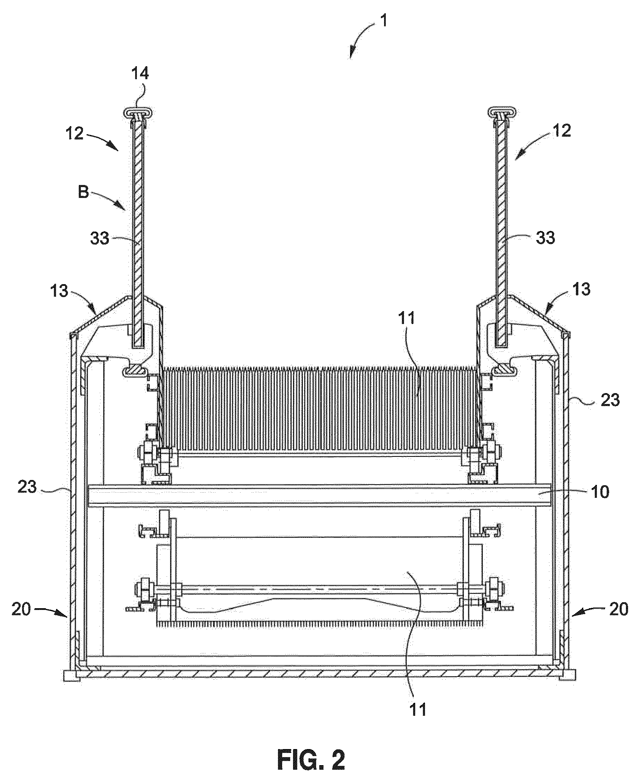

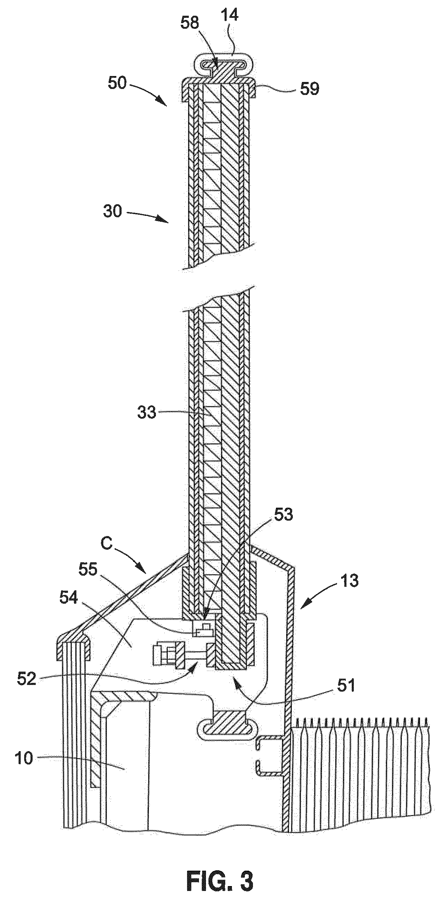

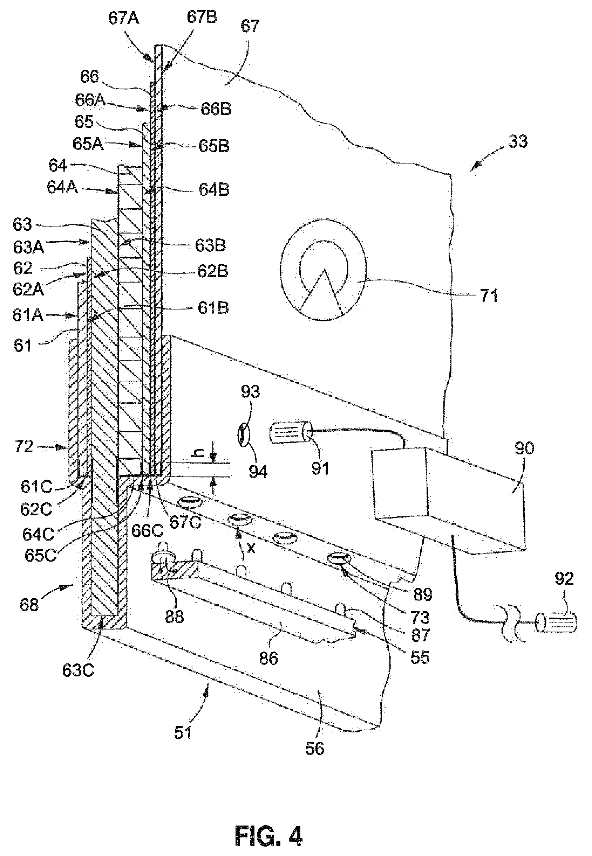

Die Figur 2 zeigt den in der Figur 1 angegeben Querschnitt A-A der Fahrtreppe 1. Entsprechend sind alle Bezugszeichen dieselben wie in der Figur 1. Dies gilt auch für die Figuren 3 und 4. In der Figur 2 sind die Anordnung des Stufenbandes 11 im Tragwerk 10 und der beiden Balustraden 12, welche mittels Balustradensockel 13 mit dem Tragwerk 10 verbunden sind, gut einsehbar. Der Aufbau der im Schnitt A-A angeordneten beleuchtbaren transparenten Paneel-Abschnitte 33 der Balustraden 12 ist in den Figuren 3 und 4 detailliert dargestellt. Auch die Führung des Handlaufs 14 am oberen Kantenbereich der Balustraden 12 und im Balustradensockel 13 ist ersichtlich.

Die Fahrtreppe 1 ist auf beiden Seiten mit beleuchtbaren transparenten Paneelen 20 verkleidet. Die im Schnitt A-A angeordneten dritten Paneel-Abschnitte 23 der beleuchtbaren transparenten Paneele 20 sind am Tragwerk 10 befestigt. Der Aufbau der beleuchtbaren transparenten Paneel-Abschnitte 23 entspricht im Wesentlichen dem Aufbau der beleuchtbaren transparenten Paneel-Abschnitte 33 der Balustraden 12, wobei die Stärken der Schichten der Paneel-Abschnitte 23 von den Stärken der Schichten der Paneel-Abschnitte 33 abweichen können. Bei Paneelen mit speziell angepassten Umrissen muss gegebenenfalls die vorteilhafteste Anordnung einer oder mehrerer Lichtquellen durch Versuche ermittelt werden, um eine möglichst gleichmäßige Lichtverteilung über die ganze Seitenoberfläche des beleuchtbaren Paneels 20, 30 beziehungsweise des Paneel-Abschnitts 23, 33 zu erwirken.

Die Figur 3 stellt eine Detailansicht des in der Figur 2 angegebenen Details B dar, welches den Aufbau des Paneel-Abschnitts 33 beziehungsweise des beleuchtbaren transparenten Paneels 30 zeigt. Dieses ist an seinem unteren Kantenabschnitt 51 in einem Befestigungsflansch 54 des Balustradensockels 13 gefasst und mittels Klemmelementen 52 festgeklemmt. Der Befestigungsflansch 54 ist mit dem Tragwerk 10 fest verbunden. Der Befestigungsflansch 54 weist einen Ausschnitt 53 auf, in welchen die Lichtquelle 55 zur Beleuchtung des Paneel-Abschnitts 33 angeordnet ist. Selbstverständlich ist die gezeigte Befestigung des Paneel-Abschnitts 33 mittels eines Befestigungsflanschs 54 nur eine von unzähligen Möglichkeiten.

Die Lichtquelle 55 ist beispielhaft als Kette von Leuchtdioden dargestellt, selbstverständlich können jegliche Arten von Lichtquellen 55 wie beispielsweise Leuchtstoffröhren, Kaltkathodenröhren, Glühlampen, organische Leuchtdioden und dergleichen mehr eingesetzt werden. Die Lichtquelle 55 kann aber auch direkt am beleuchtbaren transparenten Paneel 30 beziehungsweise am beleuchtbaren transparenten Panneel-Abschnitt 33 befestigt sein.

Wie weiter oben beschrieben, ist der Handlauf 14 im oberen Kantenabschnitt 50 des beleuchtbaren transparenten Paneels 30 beziehungsweise Paneel-Abschnitts 33 geführt. Die Führung 58 des Handlaufs 14 ist an einem Rahmenprofil 59 ausgebildet, welches sich orthogonal zur Schnittebene entlang des oberen Kantenabschnitts 50 des Paneel-Abschnitts 33 erstreckt. Das Rahmenprofil 59 fasst zudem alle oberen Kantenbereiche des mehrere Schichten umfassenden Aufbaus des Paneel-Abschnitts 33 ein.

Diesen mehrere Schichten umfassenden Aufbau des Paneel-Abschnitts 33 zeigt Figur 4 als dreidimensionale, vergrößerte Detailansicht aus der Blickrichtung C, wie dies in der Figur 3 angegeben ist. Alle beleuchtbaren transparenten Paneele der Figuren 1 bis 4 weisen im Wesentlichen dieselbe Schichtabfolge des Aufbaus auf, wie der in Figur 4 dargestellte Paneel-Abschnitt 33. Eine erste Schicht des Aufbaus ist eine erste transparente Glasscheibe 61. Eine zweite Schicht ist eine erste transparente Polymerschicht 62 und eine dritte Schicht ist eine zweite transparente Glasscheibe 63. Dieser liegt als vierte Schicht eine lichtstreuende Partikel beinhaltende Polymerwerkstoffplatte 64 an, wie sie beispielsweise von der Firma Röhm unter dem Produktnamen Plexiglas EndLighten vertrieben wird. Eine fünfte Schicht ist eine dritte transparente Glasscheibe 65, eine sechste Schicht eine zweite transparente Polymerschicht 66 und eine siebente Schicht eine vierte transparente Glasscheibe 67. Die fünfte, sechste und siebente Schicht 65, 66, 67 können auch fest miteinander verbunden sein, beispielsweise als Verbundglasscheibe. Die Glasscheibe 63 der dritten Schicht ist im vorliegenden Ausführungsbeispiel eine gehärtete Sicherheitsglasscheibe. Vorzugsweise ist wie in der Figur 3 dargestellt, die Panzerplatte der dritten Schicht 63 in der Schichtabfolge des Aufbaus näher dem Stufenband angeordnet, als die lichtstreuende Partikel beinhaltende Polymerwerkstoffplatte 64 der vierten Schicht. Dies hat den Vorteil, dass weniger Licht in Richtung des Stufenbandes gelangen kann, wodurch noch mehr vermieden wird, dass die Benutzer geblendet werden könnten. Gegebenenfalls kann anstelle der Panzerplatte 63 eine Glasscheibe 63 derselben Stärke verwendet werden, wie die Glasscheiben 61, 65, 67 der ersten, fünften und siebenten Schicht. Auch die zweite Glasscheibe 63 der dritten Schicht kann mit der ersten Glasscheibe 61 und der ersten transparenten Polymerschicht 62 als Verbundglasscheibe ausgeführt sein.

Jede Schicht weist zwei einander gegenüberliegende Seitenoberflächen 61A, 61B, 62A, 62B, 63A, 63B, 64A, 64B, 65A, 65B, 66A, 66B, 67A, 67B auf, deren flächige Ausdehnung durch einen Kantenbereich 61C, 62C, 63C, 64C, 65C, 66C, 67C begrenzt ist. Die Kantenbereiche 61C, 62C, 64C, 65C, 66C 67C der ersten, zweiten und vierten bis siebenten Schicht sind im vorliegenden Beispiel deckungsgleich. Die flächige Ausdehnung der zweiten Glasscheibe 63 der dritten Schicht ist etwas grösser bemessen, so dass diese wie in den Figuren 3 und 4 dargestellt, im unteren Kantenabschnitt 51 des Paneel-Abschnitts 33 einen Überstand 68 aufweist. Der Überstand 68 dient der Befestigung des beleuchtbaren transparenten Paneel-Abschnitt 33 am nicht dargestellten Befestigungsflansch. Selbstverständlich können auch andere Befestigungsarten zur Anwendung gelangen, wenn diese der Verbindung zwischen Balustrade und Balustradensockel ausreichende Festigkeit verleiht. Der untere Kantenabschnitt 51 des beleuchtbaren transparenten Paneel-Abschnitts 33 weist über seine Länge ein Rahmenprofil 56 auf, wodurch die Kantenbereiche 61C, 62C, 63C, 64C, 65C, 66C, 67C aller Schichten eingefasst sind.

Unterhalb des transparenten beleuchtbaren Paneels 33 beziehungsweise des Rahmenprofils 56 (mit Ausnahme des Überstandes 68) ist die Lichtquelle 55 angeordnet.

Dieses weist einen bandförmigen, flexiblen und mit Leiterbahnen 88 versehenen Grundkörper 86 auf, auf dessen Oberseite Leuchtdioden 87 angeordnet sind. Vorzugsweise sind Leuchtdioden 87 angeordnet, die in der Lichtstärke und/oder im Farbton und/oder in der Farbsättigung einstellbar sind.

Damit das von den Leuchtdioden 87 emittierte Licht, dargestellt durch den Pfeil X, in die lichtstreuende Polymerwerkstoffplatte 64 der vierten Schicht gelangen kann, weist das Rahmenprofil 56 Durchbrüche 89 auf, die auf die Lage und Grösse der Leuchtdioden 87 abgestimmt sind. Konkret bedeutet dies im vorliegenden Beispiel, dass die Teilung der Durchbrüche 89 der Teilung der Leuchtdioden 87 auf dem Grundkörper 86 entspricht. Ferner muss der Durchmesser der einzelnen Durchbrüche 89 so gross bemessen sein, dass möglichst alles emittierte Licht in die Polymerwerkstoffplatte 64 eingespeist werden kann. Die in der Polymerwerkstoffplatte 64 der vierten Schicht eingebetteten lichtstreuenden Partikel lenken nun das in deren Kantenbereich 64C eingespeiste Licht ab, so dass dieses an den Seitenoberflächen 64A 64B aus der vierten Schicht austritt und durch die dritte, zweite und erste Schicht 63, 62, 61 beziehungsweise durch die fünfte, sechste und siebente Schicht 65, 66, 67 dringt. Das Licht tritt aus der Seitenoberfläche 61A der ersten Glasscheibe 61 der ersten Schicht, beziehungsweise aus der Seitenoberfläche 67A der vierten Glasscheibe 67 der siebenten Schicht in die Umgebung der Fahrtreppe oder des Fahrsteiges aus. Ferner kann aufgrund der transparenten Eigenschaften des transparenten Paneels beziehungsweise Paneel-Abschnitts 33 auch das sichtbare Licht, beispielsweise Tageslicht alle Schichten des Aufbaus durchdringen.

Die vier Glasscheiben 61, 63, 65, 67 der ersten, dritten, fünften und siebenten Schicht weisen einen für Glas typischen Brechungsindex von 1.45 bis 2.14 (dimensionslose Größe) auf. Die transparenten Polymerschichten 62, 66 der zweiten und sechsten Schicht weist einen Brechungsindex im Bereich von 1.48 bis 1.56 auf. Bei der Verwendung der verschiedenen Materialien ist es unwahrscheinlich, dass die Polymerschichten 62, 66 genau denselben Brechungsindex wie die vier Glasscheiben 61, 63, 65, 67 aufweisen, diese unterscheiden sich aber nur geringfügig voneinander. Dies führt dazu, dass das durch Kratzer in der Oberfläche der Polymerplatte 64 der vierten Schicht sowie durch optische Kontakte zwischen den Schichten gebündelte Licht zerstreut wird, ohne es wahrnehmbar in die Spektralfarben des sichtbaren Lichts zu zerlegen. Schon aus geringer Distanz betrachtet, weist der beleuchtete transparente Paneel-Abschnitt 33 durch diesen Aufbau eine homogen leuchtende Seitenoberfläche 61A der ersten transparenten Glasscheibe 61 und eine homogen leuchtende Seitenoberfläche 67B der vierten transparenten Glasscheibe 67 auf. Dementsprechend weist jedes diesen Aufbau beinhaltende beleuchtbare transparente Paneel zu beiden Seiten solche gleichmäßig leuchtenden Seitenoberflächen auf. Die Seitenoberflächen 61A, 67B der ersten und siebenten Schicht können ferner von einer Motivfolie überspannt oder mit einer Bedruckung 71 versehen sein.

Durch den mehrere Schichten 61, 62, 63, 64, 65, 66, 67 aufweisenden Aufbau des Paneel-Abschnitts 33 können Fugen zwischen den einzelnen Schichten vorhanden sein, auch wenn die Schichten 61, 62, 63, 64, 65, 66, 67 satt aneinander anliegen. Die Fugenbreite der Fugen hängt von der Unebenheit der Seitenoberflächen 61B, 62A, 62B, 63A, 63B, 64A, 64B, 65A, 65B, 66A, 66B, 67A und Steifigkeit der einzelnen Schichten 61, 62, 63, 64, 65, 66, 67 ab, die aufeinander geschichtet den Aufbau des Paneel- Abschnitts 33 ergeben. Diese Fugen sind sehr schmal und weisen eine hohe Kapillarität auf. Um zu verhindern, dass sich beispielsweise Reinigungswasser in den Fugen der beleuchtbaren Paneele ansammelt, sind die Fugen im vorliegenden Ausführungsbeispiel in den Kantenbereichen 61C, 62C, 64C, 65C 66C, 67C der Schichten 61, 62, 64, 65, 66, 67 mittels eines Dichtungselements 72 umlaufend abgedichtet. Das Dichtungselement 72 weist zwischen den Schichten 61, 62, 63, 64, 65, 66, 67 eine Fugentiefe h von 0,2 mm bis 20 mm auf. Vorzugsweise beträgt die Fugentiefe jedoch 8 mm bis 12 mm. Dadurch ist die Dichtigkeit sicher gegeben und das Dichtungselement 72 kann problemlos durch das Rahmenprofil 56 oder durch Zierleisten verborgen werden, ohne zu viel beleuchtbare Seitenoberflächen 61A, 67B des Paneel-Abschnitts 33 zu verdecken. Vorzugsweise wird transparenter Silikonkautschuk als Dichtungselement 72 verwendet. Damit der Eintritt des von der Lichtquelle 55 emittierten Lichts in die Polymerwerkstoffplatte 64 der vierten Schicht nicht behindert wird, weist das Dichtungselement 72 auf die Lichtquelle 55 und die Durchbrüche 89 abgestimmte Ausnehmungen 73 auf.

Wie in den Figuren 1 bis 4 gezeigt, kann eine Fahrtreppe 1 oder ein Fahrsteig 1 mehrere beleuchtbare transparente Paneele 20, 30 oder transparente Paneel-Abschnitte 21, 22, 23, 24, 31, 32, 33 aufweisen. Jedem beleuchtbaren transparenten Paneel 20, 30 oder transparenten Paneel-Abschnitt 21, 22, 23, 24, 31, 32, 33 kann mindestens ein Sensor 91, 92 zugeordnet sein, wie dies im Ausführungsbeispiel der Figur 4 schematisch dargestellt ist. Der Sensor 91 des transparenten Paneel-Abschnitts 33 ist in dessen unterem Kantenabschnitt 51 angeordnet. Damit er die Lichtstärke und/oder den Farbton und/oder die Farbsättigung des beleuchteten transparenten Paneel-Abschnitts 33 erfassen kann, weist das Rahmenprofil 56 ein Loch 93 auf. Dieses Loch 93 kann durch einen Benutzer der Fahrtreppe oder des Fahrsteiges der die Seitenoberfläche 61A der ersten Schicht 61 betrachtet, nicht gesehen werden, weil dieses durch das Rahmenprofil 56 verdeckt ist. Vorzugsweise ist das Loch 93 ebenfalls mit einer Dichtung 94 versehen, damit keine Flüssigkeiten zwischen das Rahmenprofil 56 und die vierte Glasscheibe 67 der siebenten Schicht eindringen können. Das Signal des Sensors 91 wird einer Kontrolleinheit 90 zugeführt und kann von dieser verarbeitet werden.

Die Figur 4 zeigt noch einen weiteren Sensor 92, der einem nicht dargestellten, beleuchtbaren transparenten Paneel oder Paneel-Abschnitt zugeordnet ist, beispielsweise dem in der Figur 1 dargestellten beleuchtbaren transparenten Paneel 20, mit welchem das Tragwerk verschalt ist. Die Kontrolleinheit 90 kann nun aufgrund der Sensorsignale der Sensoren 91, 92 erkennen, ob alle beleuchtbaren Paneele beleuchtet sind oder nicht. Ferner kann das Sensorsignal zur Regelung der Lichtstärke und/oder des Farbtons und/oder der Farbsättigung des zugeordneten Paneels herangezogen werden. Dies ermöglicht, die Paneele oder wenn vorhanden, die Paneel-Abschnitte nach den Vorgaben des Betreibers einer Fahrtreppe oder eines Fahrsteiges wahlweise zu schalten, den Farbton, die Farbsättigung und die Lichtstärke zu variieren oder anzupassen und durch diese Lichtakzente die Wahrnehmung und Stimmung der Benutzer zu beeinflussen.

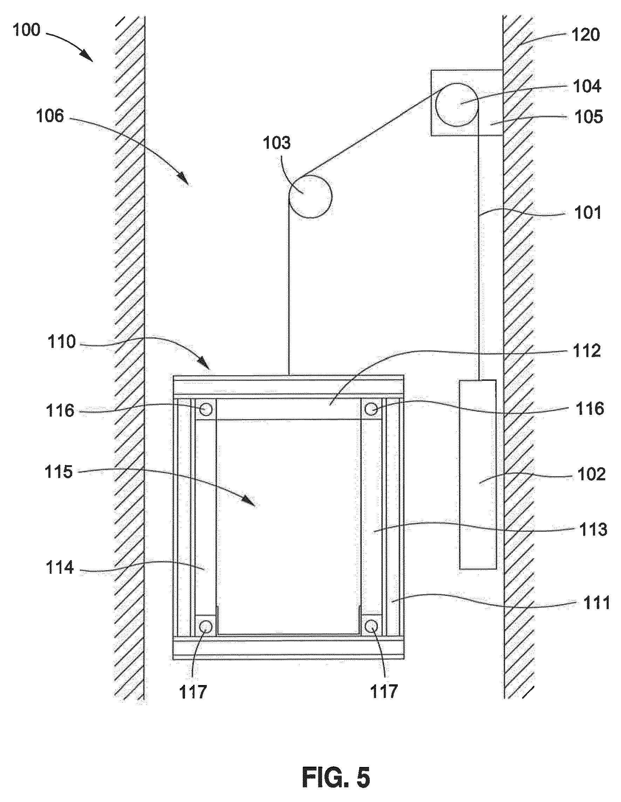

Die Figur 5 zeigt schematisch und in geschnittenem Aufriss einen Aufzug 100 mit einer Aufzugkabine 110. Die Aufzugkabine 110 ist durch ein Tragmittel 101 mit einem Gegengewicht 102 verbunden. Das Tragmittel 101 ist über eine Umlenkscheibe 103 und eine Treibscheibe 104 geführt. Die Treibscheibe 104 ist mit einem Antrieb 105 verbunden. Die Aufzugkabine 110, das Tragmittel 101, das Gegengewicht 102, die Umlenkscheibe 103, die Treibscheibe 104 und der Antrieb 105 sind in einem Aufzugschacht 106 angeordnet. Die Aufzugkabine 110 weist einen Kabinenrahmen 111 auf. Am Kabinenrahmen 111 sind als Kabinendach 112 und Kabinenwände 113, 114 dienende, beleuchtbare transparente Paneele befestigt. Deren lichtemittierende Seitenoberflächen sind gegen den Innenraum 115 der Aufzugkabine 110 und gegen die Schachtwände 120 gerichtet. Selbstverständlich kann die Aufzugkabine 110 statt in einem Aufzugschacht auch an einer Fassade eines Gebäudes angeordnet sein, so dass zumindest ein Teil der vom Innenraum 115 abgewandten, lichtemittierenden Seitenoberflächen der Kabinenwände zur Umgebung des Gebäudes hin gerichtet sind.
In den Eckbereichen des Kabinenrahmens 111 sind Lichtquellen 116, 117 angeordnet. Die in den Eckbereichen des Kabinendachs 112 angeordneten oberen Lichtquellen 116 speisen ihr emittierendes Licht kantenseitig sowohl in das beleuchtbare transparente Paneel des Kabinendachs 112 als auch in die angrenzenden Kabinenwände 113, 114. Vorzugsweise können die Lichtquellen 116, 117 in der Lichtstärke und/oder im Farbton und/oder in der Farbsättigung variiert werden. Dadurch kann das beleuchtbare transparente Paneel auch als Fahrgastinformationssystem eingesetzt werden. Wenn beispielsweise jedes Stockwerk eines Parkhauses in einer eigenen Farbe gestrichen ist, kann der Farbton der Lichtquelle auf die Farbe des jeweiligen Stockwerks angepasst werden, so dass dem Benutzer jederzeit genau bekannt ist, auf welchem Stockwerk er sich befindet.

Obwohl die Erfindung durch die Darstellung spezifischer Ausführungsbeispiele anhand einer Fahrtreppe und eines Aufzugs beschrieben worden ist, ist es offensichtlich, dass diese auch in einem Fahrsteig eingesetzt werden kann und zahlreiche weitere Ausführungsvarianten in Kenntnis der vorliegenden Erfindung geschaffen werden können. So kann nur in einem Kantenabschnitt des Kantenbereichs der Polymerwerkstoffplatte Licht eingespeist werden. Vorzugsweise wird das Licht aber an zwei einander gegenüberliegenden Kantenabschnitten eingespeist. Selbstverständlich können auch den gesamten Kantenbereich der Polymerwerkstoffplatte entlang Lichtquellen umlaufend angeordnet sein und Licht einspeisen. Ferner können bereits bestehende Fahrtreppen und Fahrsteige nachträglich mit beleuchtbaren transparenten Paneelen ausgerüstet beziehungsweise modernisiert werden.

Des Weiteren muss nicht jede Fläche eines Fahrsteiges oder einer Fahrtreppe mit einem beleuchtbaren transparenten Paneel versehen sein. Das transparente beleuchtbare Paneel oder Paneel-Abschnitt muss auch nicht die gesamte verfügbare Fläche überspannen. So kann beispielsweise der beleuchtbare Teil einer Seitenwand des Tragwerks oder einer Balustrade nur bis zur halben Höhe derselben reichen.

Das beleuchtbare transparente Paneel kann nicht nur zur optischen Aufwertung einer Fahrtreppe oder eines Fahrsteiges dienen, sondern auch zur Signalisierung von Betriebszuständen eingesetzt werden. Beispielsweise können die beleuchtbaren transparenten Paneele die Laufrichtung des Stufenbandes oder Palettenbandes anzeigen, wobei beispielsweise die Abgangszone rot beleuchtet und die Zugangszone grün beleuchtet wird. Ausser Betrieb gesetzte Fahrtreppen könnten mit einer weiteren Farbe, beispielsweise blau beleuchtet werden, während Balustraden von durch Unterhaltsarbeiten stillgelegten Fahrtreppen und Fahrsteigen gelb blinken könnten.

Ferner können die beleuchtbaren transparenten Paneele auch weitere transparente oder halbtransparente Schichten zwischen den vorangehend beschriebenen Schichten aufweisen. Die erweiterte Schichtabfolge dieser beleuchtbaren transparenten Paneele entspricht trotz der hinzugefügten Schichten dem beanspruchten Aufbau, weshalb auch diese vom Schutzumfang umfasst werden. Jede zusätzliche Schicht vermindert aber die Lichtleistung des beleuchtbaren transparenten Paneels und reduziert seine Durchlässigkeit für sichtbares Licht über seine Gesamtdicke.

## Patentansprüche

1. Beleuchtbares transparentes Paneel (20, 30, 112, 113, 114), welches durch mindestens eine Lichtquelle (55, 116, 117) beleuchtbar ist und bei dem die Lichtquelle (55, 116, 117) an mindestens einem Kantenbereich des beleuchtbaren transparenten Paneels (20, 30, 112, 113, 114) angeordnet ist, **dadurch gekennzeichnet, dass** das beleuchtbare transparente Paneel (20, 30, 112, 113, 114) einen mehrere Schichten (61, 62, 63, 64, 65, 66, 67) beinhaltenden Aufbau aufweist, dass jede Schicht (61, 62, 63, 64, 65, 66, 67) zwei einander gegenüberliegende Seitenoberflächen (61A, 61B, 62A, 62B, 63A, 63B, 64A, 64B, 65A, 65B, 66A, 66B, 67A, 67B) aufweist und in ihrer flächigen Ausdehnung durch einen Kantenbereich (61C, 62C, 63C, 64C, 65C, 66C, 67C) begrenzt ist, dass die Schichten (61, 62, 63, 64, 65, 66, 67) des Aufbaus mit ihren Seitenoberflächen (61B, 62A, 62B, 63A, 63B, 64A, 64B, 65A, 65B, 66A, 66B, 67A) anliegend angeordnet sind und dass der Aufbau eine Schichtabfolge aufweist, deren erste Schicht eine erste Glasscheibe (61) ist, deren zweite Schicht eine erste transparente Polymerschicht (62) ist, deren dritte Schicht eine zweite Glasscheibe (63) ist, deren vierte Schicht eine transparente, kantenbeleuchtbare, lichtstreuende Partikel beinhaltende Polymerwerkstoffplatte (64) ist, deren fünfte Schicht eine dritte Glasscheibe (65) ist, deren sechste Schicht eine zweite transparente Polymerschicht (66) ist und deren siebente Schicht eine vierte Glasscheibe (67) ist.

2. Beleuchtbares transparentes Paneel (20, 30, 112, 113, 114) nach Anspruch 1, wobei die erste Glasscheibe (61), die erste transparente Polymerschicht (62) und die zweite Glasscheibe (63) eine Verbundglasscheibe sind und/oder die dritte Glasscheibe (65), die zweite transparente Polymerschicht (66) und die vierte Glasscheibe (67) eine Verbundglasscheibe sind.

3. Beleuchtbares transparentes Paneel (20, 30, 112, 113, 114) nach Anspruch 1 oder 2, wobei mindestens die zweite Glasscheibe (63) oder die dritte Glasscheibe (65) eine gehärtete Sicherheitsglasscheibe ist.

4. Beleuchtbares transparentes Paneel (20, 30, 112, 113, 114) nach einem der Ansprüche 1 bis 3, wobei dieses in mindestens einem Kantenabschnitt (50, 51) der Kantenbereiche (61C, 62C, 63C, 64C, 65C, 66C, 67C) der anliegend angeordneten Schichten (61, 62, 63, 64, 65, 66, 67) ein Rahmenprofil (56, 59) aufweist, durch das die Kantenbereiche (61C, 62C, 63C, 64C, 65C, 66C, 67C) der Schichten (61, 62, 63, 64, 65, 66, 67) in diesem Kantenabschnitt (50, 51) eingefasst sind.

5. Beleuchtbares transparentes Paneel (20, 30, 112, 113, 114) nach einem der Ansprüche 1 bis 3, wobei dieses ein Rahmenprofil aufweist, durch das die Kantenbereiche (61C, 62C, 63C, 64C, 65C, 66C, 67C) der anliegend angeordneten Schichten (61, 62, 63, 64, 65, 66, 67) umlaufend eingefasst sind.

6. Beleuchtbares transparentes Paneel (20, 30, 112, 113, 114) nach Anspruch 4 oder 5, wobei das Rahmenprofil (56, 59) mindestens einen Durchbruch (89) aufweist, welcher auf eine Lage und Größe der mindestens einen Lichtquelle (55, 116, 117) abgestimmt ist.

7. Beleuchtbares transparentes Paneel (20, 30, 112, 113, 114) nach einem der Ansprüche 1 bis 6, wobei das mindestens eine beleuchtbare transparente Paneel (20, 30, 112, 113, 114) in mehrere Paneel-Abschnitte (21, 22, 23, 24, 31, 32, 33) unterteilt ist und jeder Paneel-Abschnitt (21, 22, 23, 24, 31, 32, 33) den aus mehreren, anliegend angeordneten Schichten (61, 62, 63, 64, 65, 66, 67) beinhaltenden Aufbau aufweist.

8. Beleuchtbares transparentes Paneel (20, 30, 112, 113, 114) nach einem der Ansprüche 1 bis 7, wobei durch den mehrere Schichten (61, 62, 63, 64, 65, 66, 67) aufweisenden Aufbau eines beleuchtbaren Paneels (20, 30, 112, 113, 114) beziehungsweise eines Paneel-Abschnitts (21, 22, 23, 24, 31, 32, 33) Fugen zwischen den einzelnen Schichten (61, 62, 63, 64, 65, 66, 67) vorhanden sind und diese Fugen in den Kantenbereichen (61C, 62C, 63C, 64C, 65C, 66C, 67C) der Schichten (61, 62, 63, 64, 65, 66, 67) mittels eines Dichtungselements (72) umlaufend abgedichtet sind, wobei das Dichtungselement (72) zwischen den Schichten (61, 62, 63, 64, 65, 66, 67) eine Fugentiefe (h) von 0,2 mm bis 20 mm, vorzugsweise von 8 mm bis 12 mm aufweist.

9. Beleuchtbares transparentes Paneel (20, 30, 112, 113, 114) nach Anspruch 8, wobei das Dichtungselement (72) eine auf die Lichtquelle (55, 116, 117) und die vierte Schicht (64) abgestimmte Ausnehmung (73) aufweist.

10. Beleuchtbares transparentes Paneel (20, 30, 112, 113, 114) nach einem der Ansprüche 7 bis 9, wobei jedem Paneel (20, 30, 112, 113, 114) oder Paneel-Abschnitt (21, 22, 23, 24, 31, 32, 33) mindestens eine eigene, in der Lichtstärke und/oder im Farbton und/oder in der Farbsättigung einstellbare Lichtquelle (55, 116, 117) zugeordnet ist.

11. Beleuchtbares transparentes Paneel (20, 30, 112, 113, 114) nach Anspruch 10, wobei jedem Paneel (20, 30, 112, 113, 114) oder Paneel-Abschnitt (21, 22, 23, 24, 31, 32, 33) mindestens ein Sensor (91, 92) zugeordnet ist, durch welchen Sensor (91, 92) die Lichtstärke und/oder der Farbton und/oder die Farbsättigung des zugeordneten, beleuchteten Paneels (20, 30, 112, 113, 114) oder Paneel-Abschnitts (21, 22, 23, 24, 31, 32, 33) erfassbar und dessen Signal einer Kontrolleinheit (90) zuführbar ist.

12. Beleuchtbares transparentes Paneel (20, 30, 112, 113, 114) nach Anspruch 11, wobei mindestens zwei Paneel-Abschnitte (21, 22, 23, 24, 31, 32, 33) vorhanden sind, einer der Paneel-Abschnitte (21, 22, 23, 24, 31, 32, 33) als Master definiert ist und die Lichtstärke und/oder den Farbton und/oder die Farbsättigung vorgibt und die übrigen Paneel-Abschnitte (21, 22, 23, 24, 31, 32, 33) als Slave definiert sind und durch die Kontrolleinheit (90) deren Lichtstärke und/oder deren Farbton und/oder deren Farbsättigung dem als Master definierten Paneel-Abschnitt (21, 22, 23, 24, 31, 32, 33) angepasst sind.

13. Beleuchtbares transparentes Paneel (20, 30, 112, 113, 114) nach einem der Ansprüche 1 bis 12, wobei die erste und /oder siebente Schicht (61, 67) mindestens teilweise von einer Motivfolie überspannt oder mit einer Bedruckung (71) versehen ist, so dass bei eingeschalteter Lichtquelle (55, 116, 117) die Motivfolie oder die Bedruckung (71) durch das beleuchtbare Paneel (20, 30, 112, 113, 114) hinterleuchtet ist.

14. Fahrtreppe (1) oder Fahrsteig (1) beinhaltend ein Tragwerk (10), mindestens ein im Tragwerk (10) angeordnetes Stufenband (11) oder Palettenband, mindestens eine Lichtquelle (55) und je eine am Tragwerk (10) angeordnete, an jeder Längsseite des Stufenbandes (11) oder Palettenbandes sich erstreckende Balustrade (12), wobei die Balustrade (12) und/oder das Tragwerk (10) mindestens ein beleuchtbares, transparentes Paneel (20, 30) nach einem der Ansprüche 1 bis 13 aufweist und die mindestens eine Lichtquelle (55) an mindestens einem Kantenbereich des mindestens einen, beleuchtbaren transparenten Paneels (20, 30) angeordnet ist.

15. Aufzugkabine (110) eines Aufzugs (100), wobei die Aufzugkabine (110) einen Kabinenrahmen (111) und einen Kabinenboden, mindestens eine Lichtquelle (116, 117) sowie mindestens ein, mit dem Kabinenrahmen (111) verbundenes, beleuchtbares transparentes Paneel (112, 113, 114) nach einem der Ansprüche 1 bis 13 aufweist und die mindestens eine Lichtquelle (116, 117) an mindestens einem Kantenbereich des mindestens einen, beleuchtbaren transparenten Paneels (112, 113, 114) angeordnet ist.

## Claims

1. Illuminatable transparent panel (20, 30, 112, 113, 114), which can be illuminated by at least one light source (55, 116, 117) and in which the light source (55, 116, 117) is arranged at at least one edge region of the illuminatable transparent panel (20, 30, 112, 113, 114), **characterised in that** the illuminatable transparent panel (20, 30, 112, 113, 114) has a construction which comprises a plurality of layers (61, 62, 63, 64, 65, 66, 67), that each layer (61, 62, 63, 64, 65, 66, 67) has two mutually opposite side surfaces (61A, 61B, 62A, 62B, 63A, 63B, 64A, 64B, 65A, 65B, 66A, 66B, 67A, 67B) and is bounded in its area dimension by an edge region (61C, 62C, 63C, 64C, 65C, 66C, 67C), that the layers (61, 62, 63, 64, 65, 66, 67) of the construction are arranged with the side surfaces (61 B, 62A, 62B, 63A, 63B, 64A, 64B, 65A, 65B, 66A, 66B, 67B) thereof against one another and that the construction has the layer sequence in which a first layer is a first glass pane (61), the second layer is a first transparent polymer layer (62), the third layer is a second glass pane (63), the fourth layer is a transparent edge-illuminatable polymer material plate (64) containing light-dispersing particles, the fifth layer is a third glass pane (65), the sixth layer is a second transparent polymer layer (66) and the seventh layer is a fourth glass pane (67).

2. Illuminatable transparent panel (20, 30, 112, 113, 114) according to claim 1, wherein the first glass pane (63), the first transparent polymer layer (64) and the second glass pane (65) are a composite glass pane and/or the third glass pane (65), the second transparent polymer layer (66) and the fourth glass pane (67) are a composite glass pane.

3. Illuminatable transparent panel (20, 30, 112, 113, 114) according to claim 1 or 2, wherein at least the second glass pane (63) or the third glass pane (65) is a hardened safety glass pane.

4. Illuminatable transparent panel (20, 30, 112, 113, 114) according to any one of claims 1 to 3, wherein this has in at least one edge section (50, 51) of the edge regions (61C, 62C, 63C, 64C, 65C, 66C, 67C) of the layers (61, 62, 63, 64, 65, 66, 67) arranged against one another a frame profile member (56, 59) by which the edge regions (61C, 62C, 63C, 64C, 65C, 66C, 67C) of the layers (61, 62, 63, 64, 65, 66, 67) in this edge section (50, 51) are framed.

5. Illuminatable transparent panel (20, 30, 112, 113, 114) according to any one of claims 1 to 3, wherein this comprises a frame profile member by which the edge regions (61C, 62C, 63C, 64C, 65C, 66C, 67C) of the layers (61, 62, 63, 64, 65, 66, 67) arranged against one another are framed in encircling manner.

6. Illuminatable transparent panel (20, 30, 112, 113, 114) according to claim 4 or 5, wherein the frame profile member (56, 59) has at least one passage (89) matched to a length and size of the at least one light source (55, 116, 117).

7. Illuminatable transparent panel (20, 30, 112, 113, 114) according to any one of claims 1 to 6, wherein the at least one illuminatable transparent panel (20, 30, 112, 113, 114) is divided into a plurality of panel sections (21, 22, 23, 24, 31, 32, 33) and each panel section (21, 22, 23, 24, 31, 32, 33) has the construction comprising a plurality of layers (61, 62, 63, 64, 65, 66, 67) arranged against one another.

8. Illuminatable transparent panel (20, 30, 112, 113, 114) according to any one of claims 1 to 7, wherein due to the construction, which comprises a plurality of layers (61, 62, 63, 64, 65, 66, 67), of an illuminatable panel (20, 30, 112, 113, 114) or a panel section (21, 22, 23, 24, 31, 32, 33) gaps between the individual layers (61, 62, 63, 64, 65, 66, 67) are present and these gaps are sealed around the periphery in the edge regions (61C, 62C, 63C, 64C, 65C, 66C, 67C) of the layers (61, 62, 63, 64, 65, 66, 67) by means of a sealing element (72), wherein the sealing element (72) has a joint depth (h) of 0.2 millimetres to 20 millimetres, preferably from 8 millimetres to 12 millimetres, between the layers (61, 62, 63, 64, 65, 66, 67).

9. Illuminatable transparent panel (20, 30, 112, 113, 114) according to claim 8, wherein the sealing element (72) has a cut-out (73) matched to the light source (55, 116, 117) and the fourth layer (64).

10. Illuminatable transparent panel (20, 30, 112, 113, 114) according to any one of claims 7 to 9, wherein at least one individual light source (55, 116. 117) settable in light intensity and/or in colour tone and/or in colour saturation is associated with each panel (20, 30, 112, 113, 114) or panel section (21, 22, 23, 24, 31, 32, 33).

11. Illuminatable transparent panel (20, 30, 112, 113, 114) according to claim 10, wherein at least one sensor (91, 92) is associated with each panel (20, 30, 112, 113, 114) or panel section (21, 22, 23, 24, 31, 32, 33), through which sensor (91, 92) the light intensity and/or the colour tone and/or the colour saturation of the associated illuminated panel (20, 30, 112, 113, 114) or panel section (21, 22, 23, 24, 31, 32, 33) is detectable and the signal of which sensor can be fed to a control unit (90).

12. Illuminatable transparent panel (20, 30, 112, 113, 114) according to claim 11, wherein at least two panel sections (21, 22, 23, 24, 31, 32, 33) are present, one of the panel sections (21, 22, 23, 24, 31, 32, 33) is defined as master and predetermines the light intensity and/or the colour tone and/or the colour saturation and the remaining panel sections (21, 22, 23, 24, 31, 32, 33) are defined as slave and the colour intensity and/or colour tone and/or colour saturation thereof is or are adapted by the control unit (90) to the panel section (21, 22, 23, 24, 31, 32, 33) defined as master.

13. Illuminatable transparent panel (20, 30, 112, 113, 114) according to any one of claims 1 to 12, wherein the first and/or seventh layer (61, 67) is covered at least partly by a motif film (71) or provided with printing (71) so that when the light source (55, 116, 117) is switched on the motif film or the printing (71) is backlit by the illuminatable panel (20, 30, 112, 113, 114).

14. Escalator (1) or moving walkway (1) comprising a support structure (10), at least one step belt (11) or plate belt (11) arranged in the support structure (10), at least one light source (55) and a respective balustrade (12) arranged at the support structure (10) and extending at each longitudinal side of the step belt (11) or plate belt, wherein the balustrade (12) and/or the support structure (10) comprises or comprise at least one illuminatable transparent panel (20, 30) according to any one of claims 1 to 13 and the at least one light source (55) arranged at at least one edge region of the at least one illuminatable transparent panel (20,30).

15. Lift cage (110) of a lift (100), wherein the lift cage (110) comprises a cage frame (111) and a cage floor, at least one light source (116, 117) as well as at least one illuminatable transparent panel (112, 113, 114), which is connected with the cage frame (111), according to any one of claims 1 to 13 and the at least one light source (116, 117) is arranged at at least one edge region of the illuminatable transparent panel (112, 113, 114).

## Revendications

1. Panneau transparent pouvant être éclairé (20, 30, 112, 113, 114) qui peut être éclairé par au moins une source de lumière (55, 116, 117) et pour lequel la source de lumière (55, 116, 117) est disposée sur au moins une zone de bordure du panneau transparent pouvant être éclairé (20, 30, 112, 113, 114), **caractérisé en ce que** le panneau transparent pouvant être éclairé (20, 30, 112, 113, 114) comporte une structure contenant plusieurs couches (61, 62, 63, 64, 65, 66, 67), **en ce que** chaque couche (61, 62, 63, 64, 65, 66, 67) présente deux surfaces latérales opposées (61A, 61B, 62A, 62B, 63A, 63B, 64A, 64B, 65A, 65B, 66A, 66B, 67A, 67B) et est limitée dans son extension plane par une zone de bordure (61C, 62C, 63C, 64C, 65C, 66C, 67C), **en ce que** les couches (61, 62, 63, 64, 65, 66, 67) de la structure sont disposées avec leurs surfaces latérales (61B, 62A, 62B, 63A, 63B, 64A, 64B, 65A, 65B, 66A, 66B, 67A) voisines, et **en ce que** la structure comporte une succession de couches dont la première couche est une première plaque de verre (61), dont la deuxième couche est une première couche polymère transparente (62), dont la troisième couche est une deuxième plaque de verre (63), dont la quatrième couche est une plaque de matériau polymère transparente (64) pouvant être éclairée par le chant et contenant des particules dispersant la lumière, dont la cinquième couche est une troisième plaque de verre (62), dont la sixième couche est une deuxième couche de polymère transparente (66) et dont la septième couche est une quatrième plaque de verre (67).

2. Panneau transparent pouvant être éclairé (20, 30, 112, 113, 114) selon la revendication 1, étant précisé que la première plaque de verre (61), la première couche de polymère transparente (62) et la deuxième plaque de verre (63) constituent une plaque de verre feuilleté et/ou la troisième plaque de verre (65), la deuxième couche de polymère transparente (66) et la quatre plaque de verre (67) constituent une plaque de verre feuilleté.

3. Panneau transparent pouvant être éclairé (20, 30, 112, 113, 114) selon la revendication 1 ou 2, étant précisé qu'au moins la deuxième plaque de verre (63) ou la troisième plaque de verre (65) est une plaque de verre de sécurité trempé.

4. Panneau transparent pouvant être éclairé (20, 30, 112, 113, 114) selon l'une des revendications 1 à 3, étant précisé qu'il présente, dans au moins un tronçon de bordure (50, 51) des zones de bordure (61C, 62C, 63C, 64C, 65C, 66C, 67C) des couches (61, 62, 63, 64, 65, 66, 67) voisines, un profilé formant cadre (56, 59) qui borde lesdites zones de bordure (61C, 62C, 63C, 64C, 65C, 66C, 67C) des couches (61, 62, 63, 64, 65, 66, 67) dans ce tronçon de bordure (50, 51).

5. Panneau transparent pouvant être éclairé (20, 30, 112, 113, 114) selon l'une des revendications 1 à 3, étant précisé qu'il comporte un profilé formant cadre qui borde sur tout le tour les zones de bordure (61C, 62C, 63C, 64C, 65C, 66C, 67C) des couches (61, 62, 63, 64, 65, 66, 67) voisines.

6. Panneau transparent pouvant être éclairé (20, 30, 112, 113, 114) selon la revendication 4 ou 5, étant précisé que le profilé formant cadre (56, 59) comporte au moins une ouverture (89) qui est adaptée à une position et à une taille de la ou des sources de lumière (55, 116, 117).

7. Panneau transparent pouvant être éclairé (20, 30, 112, 113, 114) selon l'une des revendications 1 à 6, étant précisé que le ou les panneaux transparents pouvant être éclairés (20, 30, 112, 113, 114) sont divisés en plusieurs tronçons de panneaux (21, 22, 23, 24, 31, 32, 33), et que chaque tronçon de panneau (21, 22, 23, 24, 31, 32, 33) comporte la structure composée de plusieurs couches (61, 62, 63, 64, 65, 66, 67) voisines.

8. Panneau transparent pouvant être éclairé (20, 30, 112, 113, 114) selon l'une des revendications 1 à 7, étant précisé que du fait de la structure d'un panneau pouvant être éclairé (20, 30, 112, 113, 114) ou d'un tronçon de panneau (21, 22, 23, 24, 31, 32, 33) comportant plusieurs couches (61, 62, 63, 64, 65, 66, 67), il y a des joints entre les différentes couches (61, 62, 63, 64, 65, 66, 67), et que ces joints sont rendus étanches dans les zones de bordure (61C, 62C, 63C, 64C, 65C, 66C, 67C), sur tout le tour, à l'aide d'un élément d'étanchéité (72), l'élément d'étanchéité (72) entre les couches (61, 62, 63, 64, 65, 66, 67) présentant une épaisseur de joint (h) de 0,2 mm à 20 mm, de préférence de 8 mm à 12 mm.

9. Panneau transparent pouvant être éclairé (20, 30, 112, 113, 114) selon la revendication 8, étant précisé que l'élément d'étanchéité (72) comporte un creux (73) adapté à la source de lumière (55, 116, 117) et à la quatrième couche (64).

10. Panneau transparent pouvant être éclairé (20, 30, 112, 113, 114) selon l'une des revendications 7 à 9, étant précisé qu'à chaque panneau (20, 30, 112, 113, 114) ou tronçon de panneau (21, 22, 23, 24, 31, 32, 33) est associée au moins une source de lumière (55, 116, 117) individuelle, dont l'intensité lumineuse et/ou la teinte et/ou la saturation de couleur sont réglables.

11. Panneau transparent pouvant être éclairé (20, 30, 112, 113, 114) selon la revendication 10, étant précisé qu'à chaque panneau (20, 30, 112, 113, 114) ou tronçon de panneau (21, 22, 23, 24, 31, 32, 33) est associé au moins un capteur (91, 92) grâce auquel l'intensité lumineuse et/ou la teinte et/ou la saturation de couleur du panneau (20, 30, 112, 113, 114) ou tronçon de panneau (21, 22, 23, 24, 31, 32, 33) éclairé associé peuvent être détectées, et dont le signal peut être transmis à une unité de contrôle (90).

12. Panneau transparent pouvant être éclairé (20, 30, 112, 113, 114) selon la revendication 11, étant précisé qu'il est prévu deux tronçons de panneau (21, 22, 23, 24, 31, 32, 33), que l'un des tronçons de panneau (21, 22, 23, 24, 31, 32, 33) est défini comme maître et prédéfinit l'intensité lumineuse et/ou la teinte et/ou la saturation de couleur tandis que les autres tronçons de panneau (21, 22, 23, 24, 31, 32, 33) sont définis comme esclaves, et que grâce à l'unité de contrôle (90), l'intensité lumineuse et/ou la teinte et/ou la saturation de couleur de ces autres tronçons de panneau (21, 22, 23, 24, 31, 32, 33) sont adaptées au tronçon de panneau (21, 22, 23, 24, 31, 32, 33) défini comme maître.

13. Panneau transparent pouvant être éclairé (20, 30, 112, 113, 114) selon l'une des revendications 1 à 12, étant précisé que les première et/ou septième couches (61, 67) sont au moins en partie couvertes par un film à motif ou pourvues d'une impression (71), de sorte que lorsque la source de lumière (55, 116, 117) est allumée, le film à motif ou l'impression (71) est rétroéclairé grâce au panneau pouvant être éclairé (20, 30, 112, 113, 114).

14. Escalier roulant (1) ou trottoir roulant (1) contenant une ossature (10), au moins une bande de marches (11) ou bande de palettes disposée dans l'ossature (10), au moins une source de lumière (55), et une balustrade (12) disposée sur l'ossature (10) et s'étendant sur chaque côté longitudinal de la bande de marches (11) ou de la bande de palettes, étant précisé que la balustrade (12) et/ou l'ossature (10) comportent au moins un panneau transparent pouvant être éclairé (20, 30) selon l'une des revendications 1 à 13, et que la ou les sources de lumière (55) sont disposées sur au moins une zone de bordure du ou des panneaux transparents pouvant être éclairés (20, 30).

15. Cabine d'ascenseur (110) d'un ascenseur (100), étant précisé que la cabine d'ascenseur (110) comporte un châssis de cabine (111) et un plancher de cabine, au moins une source de lumière (116, 117) ainsi qu'au moins un panneau transparent pouvant être éclairé (112, 113, 114) selon l'une des revendications 1 à 13 relié au châssis de cabine (111), et que la ou les sources de lumière (116, 117) sont disposées sur au moine une zone de bordure du ou des panneaux transparents pouvant être éclairés (112, 113, 113).
